(19) Europäisches Patentamt
European Patent Office
Office européen des brevets

(11) Publication number: **0 382 389 A2**

(12) **EUROPEAN PATENT APPLICATION**

(21) Application number: **90300946.2**

(51) Int. Cl.[5]: **C02F 1/00**

(22) Date of filing: **30.01.90**

(30) Priority: **08.02.89 US 308191**

(43) Date of publication of application:
**16.08.90 Bulletin 90/33**

(84) Designated Contracting States:
**DE FR GB NL SE**

(71) Applicant: **MINNESOTA MINING AND MANUFACTURING COMPANY**
**3M Center, P.O. Box 33427**
**St. Paul Minnesota 55133-3427(US)**

(72) Inventor: **Gasper, Alton J., c/o Minnesota Mining and Manufacturing Company, 2501 Hudson Road**
**P.O. Box 33427, St. Paul, MN 55133-3427(US)**

(74) Representative: **Baillie, Iain Cameron et al**
**c/o Ladas & Parry Isartorplatz 5**
**D-8000 München 2(DE)**

(54) **Method of sealing the exposed top surface of a relatively static body of liquid.**

(57) A buoyant, gelled or solid, continuous, flexible composite cover useful for sealing essentially the entire area of the exposed, top surface of a body of liquid in a relatively static condition thereby suppressing the evolution or release of volatile products such as gases, fumes, vapors, etc. from the exposed surface of said body of liquid through its exposed top surface. Said cover comprising water as the major component by weight, water-insoluble, low density filler material or blend of such material, hydrophilic, polymeric gelling agent derived from isocyanate-terminated prepolymer or polyhydroxy polymer, and surfactant or wetting agent and a method of sealing said exposed top surface of a body of liquid.

EP 0 382 389 A2

# METHOD OF SEALING EXPOSED TOP SURFACE OF RELATIVELY STATIC BODY OF LIQUID

This invention relates to a method of covering or sealing a body of liquid in a relatively static, contained condition, such as a waste-water pond or lagoon, for the purpose, for example, of controlling the evolution or release of noxious vapors or water vapor, such as by evaporation, from said body of liquid.

Water-containing air foams useful in consolidating or sealing substrates, e.g., hazardous waste sites, have been described in the art. For example, U.S. Pat. No. 4,795,590 (Kent et al.) describes air foams created by aerating an aqueous solution of surfactant and poly(oxyalkylene) isocyanate polymer, the poly-(oxyalkylene) isocyanate polymer being prepared from polyether polyols and aliphatic or, preferably, aromatic polyisocyanates. Said foam is a fluid, water-based air foam that can gel or increase in viscosity, due to the reaction of the isocyanate polymer with water, to form a poly(oxyalkylene) polyurea polymer, resulting in a persistent gelled air foam or viscous air foam.

U.S. Pat. No. 4,795,764 (Alm et al.) describes similar air foams created by aerating an aqueous solution of surfactant and poly(oxyalkylene) poly(urea) polymer derived from poly(oxyalkylene) poly(aliphatic isocyanate) prepolymer and polyamine. The isocyanate moieties of the prepolymer react with water-soluble polyamine in the presence of water, as a solvent, to form said polyurea polymer. the polyurea polymer product can be aerated to form a water-based, aerated or air-entrained, closed cell, air foam. The foam, as prepared, is fluid and can be subsequently converted or stabilized in the form of either a non-fluid, gelled air foam or a viscous air foam.

U.S. Pat. Application Ser. No. 204,110 (filed June 8, 1988) (Stern) describes aqueous air foams created by aerating an aqueous solution or dispersion comprising water as the major component by weight of said solution or dispersion, foaming agent, water-soluble polyhydroxy polymer having a plurality of hydrogen-bondable diol structures capable of complexation with borate anion, or other polyvalent ionic complexing agent, and a pH modifier to impart an appropriate pH to the solution or dispersion necessary for time-controlled formation of gelled or viscous air foam from the fluid air foam.

The aqueous air foam references described above state that the foams can contain optional components, including foam tougheners and shrink control agents, but none of the references discloses the use of glass or organic microbubbles, microspheres, or capsules to provide buoyancy, toughness and shrink resistance.

U.S. Pat. No. 3,639,258 (Corino) describes a floating roof for tanks and open pits obtained by gelling a thin layer of oil at the surface of the reservoir using diisocyante and amine gelling agent. Optionally, the buoyancy of said gelled layer of oil can be increased by the entrapment of microballoons of glass or plastic, or expanded shale during the formation of the gel.

U.S. Pat. Nos. 4,476,276 (Gasper), 4,315,703 (Gasper), and 4,383,079 (Gasper et al.) describe sealing compositions containing water-soluble, polyurethane prepolymer. Each of these references state that their sealing compositions can contain fillers to provide more shrink-resistant, substantially incompressible sealing compositions. They further state that the filler material can have particle sizes of less than 500 microns and specific gravities in the range of 0.1 to 4.0, although fillers having specific gravities of 1.0 to 3.0 are preferred for use in these sealing compositions.

One aspect this invention is a buoyant, gelled or solid, continuous, flexible, composite cover or coating useful for sealing the entire or essentially the entire area of an exposed, top surface of a body of liquid in a relatively static or contained condition (e.g., a lagoon, pond, or impoundment containing waste-water, or a vessel or tank containing flammable liquid) thereby suppressing the evolution or release of volatile products such as gases, fumes, vapors, etc. from the exposed surface of said body of liquid into the atmosphere, and preventing contaminants, precipitation, or condensate from entering said body of liquid through its exposed top surface. Said cover comprising:

(A) water as the major component by weight,

(B) water-insoluble, low density filler material or blends of such materials, e.g., glass or organic microballoons, capsules or microbubbles, as the major component by volume,

(C) hydrophilic, polymeric gelling agent derived from isocyanate-terminated prepolymer or polyhydroxy polymer, and

(D) surfactant or wetting agent.

Another aspect of this invention is a method of sealing the entire area or essentially the entire area of an exposed, top surface of a body of liquid in a relatively static condition, thereby suppressing the evolution or release of volatile gases, fumes or vapor from the exposed surface of said body of liquid into the atmosphere and preventing contaminants, precipitation, or condensate from entering said body of liquid through its exposed, top surface, said method comprising the steps of:

(i) preparing a mixture comprising water, low density filler material, surfactant or wetting agent and either isocyanate-terminated prepolymer or polyhydroxy polymer to form an initially fluid, composite mixture,

(ii) applying a sufficient quantity of said mixture, e.g., by pouring, to said exposed, top surface to entirely or essentially entirely cover said surface, with a layer of the desired thickness of said mixture, said layer resting on top of, and generally in contact with said surface, said layer then gelling or solidifying until a buoyant, flexible cover is formed.

Said initially fluid, composite mixture can be delivered and applied to the exposed, top surface of said body of liquid using any conventional means, e.g., by pumping through a hose. Said mixture can be applied directly on top of said exposed, top surface, or it can be discharged under the exposed, top surface of the body of liquid, for example by nozzles submerged in the body of liquid below said top surface. If the mixture is discharged below the exposed, top surface of the body of liquid, it will float to the top of the body of liquid where it will flow over and cover said exposed, top surface, forming a layer of the mixture which rests on and is generally in contact with the exposed, top surface of the body of liquid.

One embodiment of said method of sealing said exposed, top surface further comprises the steps of holding or aging said initially fluid composite mixture for a sufficient time prior to application of said mixture to said exposed, top surface to render said mixture essentially non-water dispersible, yet still fluid, and then applying said mixture to said exposed, top surface by discharging said mixture through one or more nozzles submerged in the body of liquid just below said exposed, top surface. Said mixture, once discharged from said nozzles, floats to the top of said body of liquid where it flows across said exposed, top surface to form a continuous, layer of the composite mixture over said surface.

The hydrophilic, polymeric gelling agents useful in this invention are derived from:

(a) water-soluble, low moisture sensitive, amine-reactive, hydrophilic aliphatic isocyanate-terminated prepolymers (e.g. isophorone diisocyanate-terminated polyether triol), described for example in U.S. Pat. No. 4,795,764;

(b) water-soluble, water-reactive, hydrophilic, isocyanate-terminated prepolymers (e.g., $OCNC_6H_3(CH_3)NHCO(OCH_2CH_2)_nOCONHC_6H_3(CH_3)NCO$ where n is sufficiently high to render the prepolymer hydrophilic and water-soluble), described for example in U.S. Pat. No. 4,795,590; and

(c) water-soluble polyhydroxy polymers (e.g., guar gum and its derivatives), such as those known organic materials described in Davidson, R. L., "Handbook of Water-Soluble Gums and Resins," McGraw-Hill Book Co., (1988), e.g. Chaps. 6 and 20. An example of a synthetic, water-soluble polyhydroxy polymer useful in the practice of this invention is poly(vinyl alcohol), which is typically manufactured by the hydrolysis of poly(vinyl acetate). It is sometimes described in the art as a polyhydric alcohol with secondary hydroxyl groups on alternate carbon atoms in the form of 1,3-diol structures, and represented structurally as:

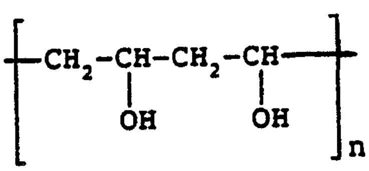

Preferred poly(vinyl alcohol) materials are those derived from poly(vinyl acetate) by at least 98% hydrolysis thereof and having a molecular weight of at least 10,000, preferably greater than 50,000, and most preferably greater than 75,000. Lower molecular weight poly(vinyl alcohol), e.g. with molecular weights of 10,000-50,000, should preferably be 100% hydrolyzed poly(vinyl acetate). The lower the molecular weight, the larger the amount of the polymer needed for achieving desired foam properties.

A class of naturally-occurring, water-soluble polyhydroxy polymers useful in the practice of this invention is the class of water-soluble polysaccharides with high molecular weight (generally at least 100,000) and having cis 1,2-diol structures in one or more monosaccharide units in the polymer chain, preferred polysaccharides being galactomannan gums, such as guar gum and locust bean gum. See, for example, U. S. Patent No. 4,579,942 (Brode et al) for a disclosure of such polysaccharides. Guar gum has long been known to be useful as a thickening agent for water and is approved as a direct food additive by the U. S. Food and Drug Administration. The structure of guar gum has been accepted as being that of a linear, alternating copolymer (e.g. see p. 6-3 and 6-4 of "Handbook of Water-Soluble Gums and Resins," supra) having cis 1,2-diol groupings in the anhydrohexose units, and can be structurally represented as

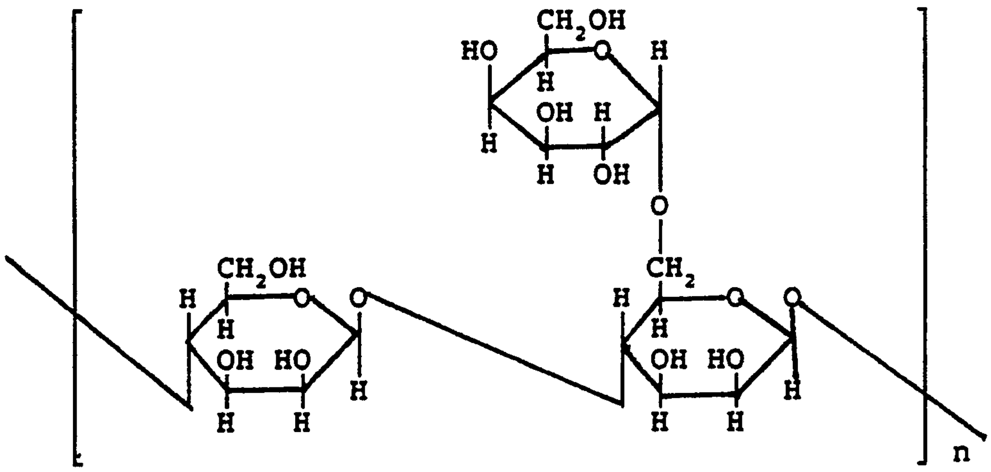

guar gum repeating unit

A commercially available guar gum useful in the practice of this invention is JAGUAR[R] 6003.

Also useful in the practice of this invention are the derivatives of guar gum, such as those formed by etherification and esterification reactions with the hydroxy functionalities. The commercially significant derivatives are mainly those prepared by etherification, e.g. hydroxyethylation with ethylene oxide, hydroxypropylation with propylene oxide, carboxymethylation with monochloroacetic acid, and quaternization with various quaternary amine compounds containing reactive chloro or epoxy sites. In the case of guar gum, each saccharide ring or anhydrohexose unit contain an average of 3 hydroxy groups. For the guar gum derivatives, molar substitution of the hydroxy groups should preferably not exceed an average of one substitution of hydroxy groups per anhydrohexose unit. A preferred range of molar substitution, e.g. with hydroxypropyl groups, is 0.1 to 2, most preferably from 0.2 to 0.6. An especially useful guar gum derivative is hydroxypropyl guar gum, a commercially available example of which is JAGUAR[R] HP-11, with an average of 0.35 to 0.45 moles of hydroxypropylation per each anhydrohexose unit of the guar gum.

When the prepolymers described in U.S. Pat. Nos. 4,795,764 or 4,795,590 are used in this invention, the prepolymers are generally added to the mixture used to form the cover in the form of a solution or dispersion of the prepolymer in a suitable, water-soluble or -dispersible, anhydrous, non-reactive organic solvent (such as those described in U.S. Pat. Nos. 4,795,764 and 4,795,590).

Generally, the aromatic isocyanate-terminated prepolymers described in U.S. Pat. No. 4,795,590 are preferred for use in this invention because they react rapidly with water resulting in the formation of polyurea polymeric gelling agent having a plurality of blocks or backbone segments of hydrophilic, poly-(oxyalkylene) units. The formation of said polyurea polymeric gelling agent results in the gelling or solidification of said initially fluid, composite mixture to form the buoyant, flexible composite cover of this invention.

Generally, the prepolymers described in U.S. Pat. No. 4,795,764 are less preferred for preparation of the polymeric gelling agent because typically they cannot be rapidly reacted directly with water, but instead must be reacted with water-soluble, isocyanate-reactive, polyamine chain-extender or cross-linker in order to rapidly form hydrophilic, polyurea, polymeric gelling agent. Thus these isocyanate-terminated prepolymers require more complex reaction mixtures which are usually less convenient to use in this invention. The polyamine and the relative ratios and amounts of prepolymer and polyamine required to form the polyurea, polymeric gelling agent are also described in U.S. Pat. No. 4,795,764. The polyurea, polymeric gelling agent prepared from the prepolymers described in U.S. Pat. No. 4,795,764 and polyamine will have residues, derived from the prepolymer, which are linked essentially by urylene linkages, i.e., -NH-C(O)NH-.

Generally, the polyhydroxy polymers are least preferred for preparation of the polymeric gelling agent. The polyhydroxy polymer is crosslinked using a polyvalent ionic complexing agent to form the polymeric gelling agent. Generally a pH modifier (e.g., sodium hydroxide or acetic acid) must also be added to the polyhydroxy polymer and complexing agent in order to impart the appropriate pH to the mixture necessary to achieve a time-controlled gelling of the polyhydroxy polymer. Thus the polyhydroxy polymer also requires a more complex reaction system than the isocyanate-terminated prepolymers described in U.S. Pat. No. 4,795,590, and is somewhat less convenient to use in this invention. Also, gelled or solidified

covers formed using crosslinked polyhydroxy polymer as gelling agent tend to be less strong than those made using the isocyanate-terminated prepolymers described in U.S. Pat. Nos. 4,795,590 and 4,795,764.

The polyvalent ionic complexing agents include known crosslinking agents for the polyhydroxy polymers and representatively include alkali metal borates such as sodium and potassium borates, alkali metal pyroantimonates such as sodium and potassium pyroantimonates, titanates such as sodium and potassium fluorotitanates and potassium titanium oxalate, chromates such as sodium and potassium chromates and dichromates, vanadates such as ammonium vanadate, and the like (see, for example, said U. S. Defensive Publication T901,022 and U. S. Patent Nos. 4,021,355, 4,568,481, 3,264,245, and 3,794,115 for further disclosure of such crosslinking agents). Borax, $Na_2B_4O_7 \cdot 10H_2O$, the salt of a strong base and a weak acid, hydrolyzes in aqueous solution to form a boric acid-borate buffer having a pH of around 9. The borate anion, $B(OH)_4^-$, present in alkaline solutions, is capable of complexation, through hydrogen bonding, with the cis 1,2-diol or the 1,3-diol groupings in the polyhydroxy polymer, leading to crosslinking thereof, which complexation may be illustrated as follows:

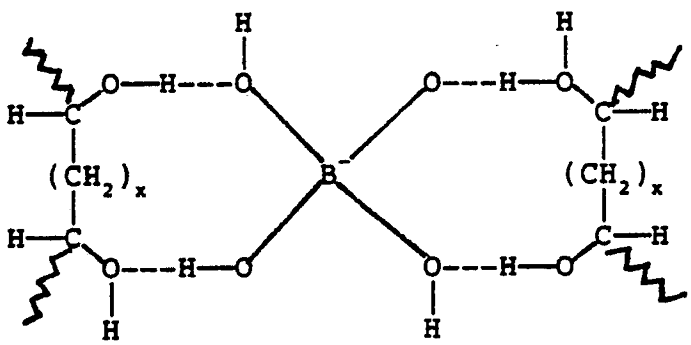

where x is zero, e.g. as in the case of a galactomannan gum such as guar gum or a derivative thereof such as hydroxypropyl guar gum, or x is 1, e.g. as in the case of poly(vinyl alcohol). E. Z. Casassa et al., J. of Chem. Ed. 63, 57-60 (1986) illustrates such complexation.

The pH modifiers used in this invention can be acids to lower the pH such as organic acids, e.g. acetic, oxalic, or citric acid, or mineral acids, e.g. hydrochloric acid, or can be bases to raise the pH, such as organic bases, e.g. triethanolamine, or inorganic bases, e.g. sodium or ammonium hydroxide, the particular pH modifier to be used being dependent on the particular polyvalent ionic complexing agent chosen. The amount of pH modifier to be used being dependent on the pH necessary for gellation of the composite cover mixture. Where borax is used as the crosslinking agent, gelation would occur too fast if the pH of the cover mixture is too low and a base pH modifier is not included in the formulation to raise its pH. Where potassium pyroantimonate is used, the desired gelation or viscosity build-up would not occur or readily occur if the pH of the cover mixture is too high and an acid pH modifier is not included in the formulation to lower its pH. For example, a composite mixture based on guar gum or hydroxypropyl guar gum as the polyhydroxy polymer and borax as the crosslinking agent having a pH of about 9 to 10.5, preferably 9 to 10 (which alkaline pH control can be obtained by adding appropriate amounts of a base, e.g. NaOH, $Na_2CO_3$, or $NH_4OH$), can be gelled with borax using a borax:gum weight ratio of 1:20 to 1:1, preferably 1:10 to 1:5. The borax can be added to the formulation after the guar component has been in contact with the water of the formulation for a residence hydration time of 15 to 600 seconds or as long as 3 hours or longer, preferably at least 30 seconds. If the hydration time is less than 15 seconds, the mixture generally does not readily gel. If the pH of the cover mixture is alkaline but lower than about 9, it may gel too rapidly. If the pH is greater than about 10.5, the desired gelation or viscosity-buildup may be too long or may not occur. A composite mixture based on guar gum or hydroxypropyl guar gum as the polyhydroxy polymer and potassium pyroantimonate, $K_2H_2Sb_2O_7$, as the crosslinking agent having a pH of 3.5 to 5.5 and preferably 4 to 4.5 (which pH control can be obtained by adding appropriate amounts of an acid, e.g. acetic acid, oxalic acid, citric acid, HCl, $H_2SO_4$, $H_3PO_4$, $HNO_3$, $KHSO_4$, or $KHSO_4$ in combination with $NaOCOCH_3$), can be gelled with potassium pyroantimonate using a pyroantimonate:gum weight ratio of 1:50 to 1:20, preferably 1:40 to 1:30.

Without wishing to limit the invention, it is believed that the polyurea polymer or crosslinked polyhydroxy polymer gelling agent, water, and any optional ingredients form a matrix which binds the water-insoluble, low-density filler material together to form the buoyant, composite cover.

The quantity of polymeric gelling agent, and likewise isocyanate-terminated prepolymer or polyhydroxy

polymer, used to form the cover should be sufficient to bind the low-density filler material together and form a tough, resilient, flexible, elastic cover. While the amount required will depend largely upon the type of gelling agent and the type and amount of low-density filler material selected for the cover, typically 1 to 15 weight percent, and preferably 2 to 10 weight percent of isocyanate-terminated prepolymer or polyhydroxy polymer, based on the total weight of the initially fluid, composite mixture used to make the cover, will be sufficient. If the polymeric gelling agent is derived from the isocyanate-terminated prepolymer described in U.S. Pat. No. 4,795,590, the weight percent of the gelling agent in the cover will be approximately the same as the weight percent of prepolymer added to the composite mixture. If the polymeric gelling agent is derived from the isocyanate-terminated prepolymer described in U.S. Pat. No. 4,795,764, the weight percent of the gelling agent in the cover will be approximately equal to the weight percent of the prepolymer and the weight percent of the polyamine, if any, used to make the composite mixture. If the gelling agent is derived from polyhydroxy polymer the weight percent of the crosslinked, polyhydroxy, polymeric gelling agent in the cover will be approximately the same as the weight percent of the polyhydroxy polymer used to make the initially fluid, composite mixture.

Water-insoluble, low-density filler materials useful in this invention include glass, ceramic, or organic, e.g., plastic, microbubbles, beads, or capsules, vermiculite, natural or synthetic polymeric foams, and combinations of said filler materials. The density of the composite cover should be less than the density of the body of liquid so that said composite cover is buoyant or will float on said body of liquid. Hence, the density of the filler material used in the cover of this invention can vary depending upon the density of the body of liquid upon which said covers are intended to float. In any case, the density of the filler material must be less than that of the body of liquid. Typically, filler materials having densities of 0.02 to 1 g/cc are useful in this invention, and filler materials having densities of 0.03 to 0.5 g/cc are preferred. Preferably, the fillers are inert, non-water-swellable, and free-flowing particulates having small particle sizes, e.g., 5 microns to 1 cm. Small particle sizes generally result in more uniform composite covers.

Some of the glass microbubbles, microballoons or capsules useful in this invention are hollow glass spheres which are strong, have low density, thin walls, low porosity and are free-flowing. They and their preparation are described, for example, in U.S. Pat. Nos. 3,585,157 and 3,365,315. One type of glass microbubble useful in this invention is SCOTCHLITE™ Glass Bubbles, available commercially from the 3M Company, (e.g., C15/250, B23/500, B28/750, B37/2000, B38/4000, A16/500, A20/1000, and D32/4500), and described in that company's bulletins 70-0702-0154-9(127.5)K, 70-0701-2203-4(551)R, and 70-0701-2202-6-(551)R. These microbubbles have nominal densities of 0.135 to 0.33 g/cc, diameters of 20 to 130 microns, and wall thicknesses of 0.5 to 2.0 microns.

Some of the organic microbubbles, microballons, or capsules useful in this invention are expanded plastic capsules such as those formed from the expansion of polyvinylidene microspheres made using a "limited coalescence" suspension polymerization technique. Some of such materials are generally described in Melber, G.E., Gibbons, K.M., and Anderson, T.F., "Organic Microspheres for Supertough Syntactic Foams", 39th Annual Conference, Reinforced Plastics/Composites Institute, Jan. 16-19, 1984, pp. 1-3. Some of the materials have particle sizes of about 20 to 60 microns, densities of about 0.03 g/cc and are available commercially as EXPANCEL™ WE551, and 551WE20 from Pierce and Stevens Chemical Corporation. Said EXPANCEL™ products are available in the form of "wet cake", i.e., a non-fluid mixture comprising about 15 weight percent of expanded polyvinylidene capsules and about 85 weight percent water.

The physical properties of the cover can depend upon the type of filler material used to make the cover. For example, covers containing glass microbubbles as their only filler material tend to be less flexible and more friable than covers containing both glass microbubbles and expanded plastic capsules as their low-density filler material. Covers containing only expanded plastic capsules as filler material tend to be less tough and strong than covers containing both glass microbubbles and expanded plastic capsules. Covers containing both glass microbubbles and expanded plastic capsules also tend to be more shrink-resistant than covers containing other low-density filler materials, e.g., vermiculite. Preferably, 5 to 20 weight percent of the mixture used to make the cover is glass microbubbles and 0.8 to 2.5 weight percent of the mixture is expanded plastic capsules. Most preferably, 12.5 weight percent of the mixture used to make the cover is glass microbubbles and 1.5 weight percent of said mixture is expanded plastic capsules.

The filler material will be the major component by volume of the mixture used to make the cover. The amount of low-density filler material used to make the cover can vary depending upon the type of filler material used and the desired physical properties of the cover, however, sufficient filler material must be used to make the cover sufficiently buoyant to float on the body of liquid. Generally at least 50 volume percent, and preferably at least 70 volume percent, based on the total volume of the composite mixture used to make the cover will be filler material. The weight percent of the inert filler material used to make the

initially fluid, composite mixture will be approximately the same as the weight percent of filler material in the composite cover.

The surfactants useful in this invention are synthetic or natural organic compounds or materials capable of acting as a wetting agent or compounding aid to permit the uniform wetting of the low-density filler material with the remaining components of the composite mixture. This is important because if the low-density filler materials are not thoroughly wetted the resulting gelled, composite cover may be non-uniform, e.g. it may contain striations or layers, and may be weak or brittle. The surfactants must also be compatible with the gelling agent and any other components of the composite mixture. The surfactants useful in this invention can be nonionic, cationic, anionic, or amphoteric and compatible mixtures therof. Classes of surfactants which are useful include: soaps or the salts of fatty acids, such as those having the general formula RCOOM, where R is a fatty aliphatic group and M is an alkali metal, e.g., sodium oleate, laurate, palmitate, or stearate; fatty alkyl sulfates, such as those of the general formula $ROSO_2OM$, e.g., sodium octyl, decyl, dodecyl, tetradecyl, hexadecyl, heptadecyl, or octadecyl sulfate; salts of alkarylsulfonic acids such as those of the general formula $RC_6H_4SO_3M$, e.g., sodium octylbenzene sulfonate; ethylene oxide adducts, such as those of the general formula $R(CH_2CH_2O)_nH$ where R is a fatty aliphatic radical, e.g., where R is $C_{10}H_{21}O$ to $C_{16}H_{33}O$ and n is 10 to 60; those of the general formula $R(OCH_2CH_2)_nOSO_3M$, where R is a $C_{10}$ to $C_{18}$ alkyl, n is 1 to 3, and M is sodium; and salts of dialkyl sulfosuccinic acids, e.g., sodium dioctyl sulfosuccinate. Also see Kirk-Othmer Encyclopedia of Chemical Technology, 3rd. Ed., Vol. 22, pages 347-387, John Wiley & Sons (1983) for other surfactants useful in this invention. Preferably, the surfactant will be added to the initially fluid, composite mixture used to form the cover in the form of an aqueous solution to improve dispersion of the surfactant in the composite mixture.

If the cover is for a body of liquid comprising a low surface energy liquid such as petroleum or hydrocarbon solvents or other organic liquid, oil, waste-water lagoon contaminated with such liquids, it is particularily useful to add, in addition to the surfactants described above, fluoroaliphatic surfactants or combinations of fluoroaliphatic surfactants and fluorine-free or hydrocarbon surfactants, such as those described in U.S. Pat. Nos. 4,795,764 and 4,795,590. These surfactants will improve the spreadability or flowability of the composite, fluid mixture over the top surface of the body of liquid containing the low surface energy liquid, e.g., oil, so that continuous covers or blankets can more easily be formed. For example, surfactant concentrates such as those commercially available from the 3M Company as LIGHTWATER™ AFFF or AFFF/ATC type surfactants are particularily useful for this purpose. One particularily useful fluoroaliphatic-surfactant-containing concentrate is available commercially as AFFF FC-201 from the 3M Company.

The amount of surfactant in the mixture used to form the cover will vary and can depend upon the type of inert filler material, the type of polymeric gelling agent and upon any other ingredients used to make the mixture. However, the amount of surfactant used should be sufficient to result in a uniform, fluid composite mixture which, once applied, will freely flow over the top, exposed surface of the body of liquid without significantly dispersing in the body of liquid. Typically surfactant or wetting agent will be 0.01 to 0.1 weight percent of the total weight of the composite mixture used to form the cover. Preferably, the surfactant or wetting agent will be about 0.02 to 0.04 weight percent of the total mixture. If fluoroaliphatic or fluoroaliphatic and hydrocarbon surfactant blends are incorporated to make the fluid mixture flow easily over a low surface energy liquid, 0.1 to 0.5 weight percent and preferably 0.25 weight percent of such surfactant, based on the total weight of the composite mixture should be used. The weight percent of surfactant in the composite cover should be essentially the same as that used to make the initially fluid, composite mixture.

Optional components include: polymeric stabilizers and thickeners such as polysaccharides, partially hydrolyzed protein, starches, polyvinyl resins, e.g. polyvinyl alcohol and polyacrylamides, carboxyvinyl polymers, and poly(oxyethylene) glycol; humectants such as sorbitol; buffering agents such as sodium dihydrogen phosphate; water dispersible waxes and other water repellents; tougheners and shrink control agents such as aqueous rubber or polymeric latices, e.g, styrene-butadiene rubber latices; dyes (including non-leachable, isocyanate-reactive dyes) and pigments such as titanium dioxide; UV absorbers such as TINUVIN™ 328 to improve weatherability; odor-absorbing additives such as ANICO™, a mixture of ferrous sulfate and ascorbic acid; and other additives and components such as electrolytes, corrosion inhibitors, and biocides. Generally, the amount of solids attributable to said optional components will be less than about 40 weight percent, and preferably less than about 10 weight percent, of the fluid mixture used to make the cover. While the mixture may contain air bubbles, such as those entrained in the mixture during mixing, these bubbles will comprise a minor fraction of the total mixture volume, i.e., less that 10 percent of the total mixture volume. The weight percent of optional components and air bubbles in the composite cover will be essentially the same as the weight percent of said components in the initially fluid, composite mixture.

If the prepolymers described in U.S. Pat. Nos. 4,795,590 or 4,795,764 are used to prepare the cover, it can be conveniently prepared by combining, e.g. by mixing, an aqueous slurry of low-density filler material (and water-soluble polyamine, if required), surfactant, and prepolymer dissolved or dispersed in a water-soluble or dispersible, anhydrous, non-reactive, organic solvent. If polyhydroxy polymer is used to make the cover, an aqueous mixture of the polymer, low-density filler, pH modifier (e.g., sodium hydroxide) and surfactant can be combined. The resulting fluid, composite mixture is then combined with an aqueous solution of an ionic complexing agent.

Any conventional mixing equipment can be used to combine the components of the cover mixture for example, high shear mixers or static mixers can be used. The resulting initially fluid, composite mixture can then be applied to the exposed, top surface of the body of liquid, for example, by pumping the mixture through a hose and discharging, through the open end of said hose, said mixture on said exposed, top surface. Said mixture then flows across the exposed, top surface of said liquid body forming a continuous layer or blanket of said mixture which gels or solidifies to form the floating cover.

In one useful method of sealing said exposed, top surface, the initially fluid, composite mixture is applied to the top surface of the body of liquid by discharging the mixture through one or more nozzles submerged in said body of liquid just under, e.g. 1 to 50 cm under, the exposed, top surface of the body of liquid. Preferably, the nozzles are sufficiently submerged to prevent excessive turbulence of the exposed, top surface caused by the discharge of the mixture from the nozzles. Too much turbulence could cause the layer of the composite mixture to break up, making it difficult to form a continuous cover. The discharged mixture then floats to the top of the body of liquid, flows across the top, exposed surface of the body until it covers the entire or essentially the entire area of the top, exposed surface, and gels or solidifies. When this method is used, it is preferable to allow the mixture to age for a short time, e.g. by holding for 10 to 30 seconds in a hose or vessel, before discharging the still fluid mixture through the nozzles. After this short holding period, the mixture becomes sufficiently non-water-dispersible, yet sufficiently fluid, that it can be discharged from the nozzles into the body of liquid, and float to the top of said body of liquid to form a continuous layer with essentially no dispersion of the mixture into the liquid. This method of application makes it easy to apply the fluid, cover mixture even on windy days because the applied blanket of the fluid mixture is not as easily broken up into discrete islands or pieces while it is gelling by wave or wind action.

Generally, the bodies of liquid that can be treated using this invention are those that are not reactive, undesirably reactive or adversely affected by the covers, the initially fluid mixture used to form the covers, or the method of applying the covers.

The amount or thickness of the cover applied to the exposed, top surface of a body of liquid can vary depending on such factors as the nature, magnitude, location, and permanency of the body of liquid, the strength and toughness of the cover required, the flexibility or the cover required, the presence of environmental factors such as wind, rain, drainage, etc., and the particular threat to health, safety, and environment that the evolution or release of volatile products such as gases, fumes, vapors, etc from the body of liquid poses. Where it is desired to seal a material from ambient air to control or prevent combustion, oxidation, or evaporation of the material, the amount or thickness of the cover will be such as to suppress the volatilization or escape of the material to the atmosphere or suppress its contact with the atmosphere. Where greater strength or toughness are required, thicker covers may be necessary. Where flexibility is required, thinner covers may be required. However, strength, toughness and flexibility also depend upon the composition of the cover, e.g., choice of filler material, level of filler material, choice of gelling agent, and level of gelling agent, so that all of these factors, as well as cost, must be considered when determining cover thickness. However, generally the thickness of the cover can vary from 1 mm to 1 m, and preferably from 2 mm to 15 mm.

The instant invention provides a method whereby an effective and economical floating roof for a large tank, pit, lagoon, or impoundment such as those containing waste-water, or oil or other organic liquids can be made. The floating cover is easy to apply and maintain. Small breaks in the cover can be repaired by an application of the initially fluid, composite mixture used to make the cover. Since the cover is buoyant, tough, continuous and relatively rigid, so no support members such as netting, buoyancy aids such as floats, or ballast are required to keep the cover floating and in place on the lagoon, impoundment or vessel, despite wind action. Since the cover is initially applied in the form of a fluid mixture it can conform to lagoons, vessels, etc. of various shapes and can adapt to and often seal to the side walls or perimeter of a lagoon, vessel, etc. Since the covers are generally shrink-resistant, they will resist pulling away from the side walls of the vessel, lagoon, or impoundment for an extended period of time, e.g. 2 to 30 days or more.

Objects and advantages of this invention are illustrated in the following examples by the particular materials and amounts thereof, and other details, recited in these examples should not be construed to unduly limit this invention.

## EXAMPLES

The hydrophilic, polymeric gelling agents used in the following Examples are derived from the materials described in Table 1.

Table 1

P1-

A 75 weight % solution of toluene diisocyanate terminated, polyether triol prepolymer (a copolymer of ethlene oxide and propylene oxide sold under the trade designation THANOLTM 4070 having a molecular weight of about 5000) (prepared as described in Examples 2-13 of U.S. Pat. No. 4,795,590) diethylene glycol monoethyl ether acetate (DE acetate).

P2-

Same as P1 except 70 wt. % solution in the same solvent.

P3-

A 75 wt % solution of isophorone diisocyanate terminated THANOLTM 4070 polyether triol prepolymer (prepared as described in Example 7 of U.S. Pat. No. 4,795,764) in DE acetate.

P4-

A hydroxypropyl guar gum derivative, JAGUARTM HP-11, available commercially from Stein-Hall Specialty Chemical Company (prepared by the reaction of propylene oxide with guar gum, i.e., a galactomannan polysaccharide) containing an average of 0.35 to 0.45 hydroxypropyl groups per each trihydroxy anhydrohexose unit. The surfactants used in the following examples are described in Table 2.

Table 2

S1-

A 1.0 wt. % aqueous surfactant solution prepared from 99 g of water and 1.0 g of the following aqueous surfactant blend concentrate:

(a) 21.2 wt. % sodium decyl sulfate, (b) 5.3 wt. % N,N-dimethyl dodecylamine oxide, (c) 26.5 wt. % diethyleneglycol monobutyl ether, and (d) 47 wt. % water.

S2-

TWEENTM 80, a polyethoxylated sorbitan monooleate.

S3-

A 1.0 wt. % aqueous fluorochemical surfactant solution prepared from LIGHTWATERTM AFFF FC-201, a 27.5 wt. % aqueous concentrate.

### Example 1

A freshly prepared aqueous slurry of 100 g of aqueous surfactant solution S1, 0.03 g of surfactant S2, and 30 g of glass microbubbles, available from 3M as SCOTCHLITETM Glass Bubbles B-23/500 having a diameter of 20 to 120 microns and a density of 0.23 g/cc, was placed in a Waring blender.

To this slurry was added 10 g of isocyanate-terminated polyether polymer solution P1, and the resulting blender contents were immediately mixed on a blender setting of high for 10 seconds, and then poured onto the surface of water in a 20 x 28 cm aluminum tray. The fluid slurry flowed evenly over the entire water surface in the tray then gelled or cured in about 90 seconds to yield an approximately 0.4 cm thick flexible, buoyant, continuous, composite cover or blanket on the water surface, with no evidence of dissolution or dispersion of the composite composition. The shrinkage of the cover, stored in the water at ambient conditions 7 days, was about 1.5 % of the total initial area of the cover.

Application of a fluid slurry (prepared in the same manner) beneath the surface of the water gave a gelled composition cover similar to that obtained by applying the fluid slurry directly to the top surface of the water.

Example 2

This example was prepared exactly like that of Example 1, except that 5.0 g of a water repellent, MICHEMLUBETM 743 (a paraffin wax emulsion available from Michelman, Inc.), was added to the microbubble-surfactant slurry in the blender. After blending the resulting mixture with 10 g of polymer solution P1, the fluid composition was poured into a water-filled aluminum tray and allowed to cure on the water surface. The fluid composition was allowed to cure for about 90 seconds to form a cover similar in appearance and physical properties to the cover of Example 1. The shrinkage after 7 days was 4.3 % of the total initial area of the cover.

Example 3

A freshly prepared aqueous slurry of 100 g of a aqueous surfactant solution S1, 20 g of fine particle vermiculite, and 5.0 g of AROTEXTM 96 (a water repellent emulsion available from American Cyanamid Corporation) was placed in a Waring blender.

To this slurry was added 13 g of prepolymer solution P2, and the resulting mixture was blended for 15 seconds on high setting then poured on the water surface where it cured to give a flexible buoyant, cover on the water having similar appearance and properties to the covers described in Examples 1 and 2. The shrinkage of this composite cover, stored in the water at ambient conditions for 7 days was about 15 % of the total initial area of the cover.

Example 4

A composite cover composition comprising the following components was prepared:

(A) a slurry of 200 g of aqueous fluorochemical surfactant S3, 0.2 g of surfactant S2, 2.5 g KELGINTM MV, 20 g of a 70 weight % aqueous solution of sorbitol, 7.0 g of $NaH_2PO_4$, 100 g of glass microbubbles like those used in Example 1, 80 g of EXPANCELTM WE551 expanded polyvinylidene chloride capsules having a density of 0.03 g/cc, and 400 g water was prepared,

(B) 2.0 g of an aqueous solution containing 6.0 weight % diethylenetriamine, 20 weight % sodium decyl sulfate, 5.0 weight % N,N-dimethyl dodecylamine oxide, 25 weight % diethyleneglycol monobutyl ether, 44 weight % water, and

(C) 8.0 g of P3.

The KELGINTM MV is a refined sodium alginate available from Kelco Corporation and was added to improve dimensional stability of the blanket or cover. Sorbitol, a humectant, was added to improve the dimensional stability of the cover. $NaH_2PO_4$ was added as a buffer to improve the storage stability of (A).

All of (A), (B) and (C) were combined in a Waring blender for 12 to 15 seconds on a high setting. The resulting mixture was then poured onto the surface of water in a 20 x 28 cm aluminum tray. The fluid slurry flowed evenly over the entire water surface in the tray then cured in about 90 seconds to yield an approximately 0.4 cm thick flexible, buoyant, continuous, composite cover or blanket on the water surface, with no evidence of dissolution or dispersion of the composite composition.

Example 5

In this example a buoyant, flexible cover was made using a water-soluble, polyhydroxy polymer gelling agent gelled with a polyvalent ionic complexing agent.

The composite cover composition containing the following ingredients was prepared:

(A) 100 g of 0.75 weight % of aqueous solution of hydroxypropyl guar polymer P4,

(B) 28 g of glass microbubbles like those used in Example 1 and 22 g of EXPANCELTM WE551,

(C) 1.5 g of 10 weight % aqueous sodium hydroxide, and

(D) 2.5 g of a 4.0 weight % aqueous solution of borax, $Na_2B_40_7 \cdot 10H_20$, a polyvalent ionic complexing agent.

(A), (B), and (C) were mixed in a Waring blender for 15 seconds on a high setting, followed by addition of (D). The resulting mixture was then blended in the same blender for about 15 seconds on a high setting. The blended mixture was then poured on the surface of water in a 20 x 28 cm aluminum tray. The fluid slurry flowed evenly over the entire water surface in the tray then cured in about 15 seconds to yield a somewhat soft, buoyant, flexible blanket on the water surface, with no evidence of dissolution or dispersion of the composite composition. The cured, blanket or cover appeared to be somewhat less strong or tough than the covers made in Examples 1 through 4.

## Examples 6-8

The following examples illustrate the suppression of the volatile organic vapors from an organic liquid-contaminated body of water, utilizing the composite coating or blanket of this invention.

In each example, in the lower half of a disassembled two-piece, 25 cm diameter, cylindrical, glass chamber, having a total volume of about 5100 cc, was placed 1600 cc water, then 50 g of a selected organic liquid (i.e., toluene, methyl ethyl ketone (MEK), and ethyl acetate) was poured on the surface of the water in the chamber.

After about 10 minutes, 7.0 g of a blend of the isocyanate-terminated polymer P2 and 90 g of (A) from Example 4 were placed in a Waring blender and mixed for 15 to 20 seconds on a high setting. The resulting fluid composite composition was poured onto the organic solvent-contaminated water, where it spread over the entire surface, curing in about 5 seconds to form a buoyant, solid, flexible coating of about 1 to 2 cm in thickness.

The upper half of the glass chamber, containing nitrogen gas inlet and outlet openings, was then placed on top of the lower half of the chamber containing the buoyant-cover-coated, organic-liquid-containing water. A gas-tight seal between the upper and lower halves of the chamber was achieved by lubrication of the ground glass, mating edges of the two halves with a silicone grease before assembly.

In each example, a nitrogen gas purge of about 340 cc per minute was established and maintained in the chamber after the chamber was closed. The exiting purge gas was analyzed by gas chromatography (gc) for the presence of organic vapor and compared to a control in which the control either had no coating or the control was the same as the sample except its coating or barrier was broken or punctured on the organic liquid-contaminated water was used, i.e., the lower chamber contained only the organic liquid-contaminated water.

The suppression of organic vapor by the buoyant coating was calculated at various time intervals by comparing organic vapor gc peak areas ("counts") of samples to the control. The organic liquid contaminant used in each example, and the percent suppression of vapors from said organic liquid contaminant over time are summarized in Table 3.

Table 3

| Elapsed time after barrier application to organic-liquid contaminated water (hours) | Percent Vapor Suppression | | |
|---|---|---|---|
| | EXAMPLES | | |
| | 6 | 7 | 8 |
| | toluene | MEK | ethyl acrylate |
| 0 | 99.9 | 98.7 | 99 |
| 0.25 | 99.9 | 93 | -- |
| 0.33 | -- | -- | 99 |
| 0.50 | 99.9 | 86 | 98 |
| 0.67 | 99.9 | -- | 98 |
| 1.0 | 99.9 | 66 | 97 |
| 1.33 | 99.9 | (b) | 95 |
| 1.7 | 99.9 | | (b) |
| 2.0 | 99.9 | | |
| 4 | 99 | | |
| 8 | 99 | | |
| 16 | 99 | | |

(b) No further data.

Examples 9 and 10

This example illustrates the use of a UV stabilizer to improve the weatherability of the coating of this invention.

The basic coating formulation used as a control composition was the same as that used in Example 6, and Examples 9 and 10 were prepared using that formulation except that to this basic formulation TINUVINTM 328 UV stabilizer was added. In Example 9, TINUVINTM was added at a level of 0.25 weight percent of the total solids of composite composition weight. In Example 10, TINUVINTM was added at a 0.50 weight % level based on the total solids of the composite composition weight. The fluid mixture was poured on a flat, non-adherent surface and the mixture was allowed to cure. The cured blankets were cut into samples about 7.5 cm x 7.5 cm, and about 3 mm thick.

Samples were then placed in an Atlas Weatherometer and radiated with a xenon lamp with a spray cycle of 18 minute duration every 102 minutes. At the end of 500 hours, the samples were inspected. The results are presented in Table 4.

Table 4

| Example No. | TINUVIN 328 | Appearance |
|---|---|---|
| control | none | Severe flaking; about 25% portion of sample missing; slight browning |
| 9 | 0.25 wt % | Some flaking; about 5% portion of sample missing; no browning |
| 10 | 0.50 wt % | Slight flaking; sample intact; slight browning (in scattered small areas) |

The results indicate that the addition of a UV stabilizer can increase the field life of the buoyant, composite covers of this invention.

Various modifications and alterations of this invention will become apparent to those skilled in the art without departing from the scope and spirit of this invention.

## Claims

1. A buoyant, gelled, continuous, flexible, composite cover useful for sealing essentially the entire area of an exposed, top surface of a body of liquid in a relatively static condition, thereby suppressing the evolution or release of volatile gases, fumes or vapor from the exposed surface of said body of liquid into the atmosphere and preventing contaminants, precipitation, or condensate from entering said body of liquid through its exposed, top surface, characterized in that said cover comprises:

(A) water as the major component by weight,

(B) water-insoluble, low density filler material or blends of such materials as the major component by volume,

(C) hydrophilic, polymeric gelling agent derived from isocyanate-terminated prepolymer or polyhydroxy polymer, and

(D) surfactant.

2. The cover of claim 1 further characterized by the feature that said low density filler material comprises at least 50 volume percent of the total volume of the cover.

3. The cover of any of claims 1 to 2 further characterized by the feature that said gelling agent is derived from aliphatic isocyanate-terminated prepolymer.

4. The cover of claim 3 further characterized by the feature that said gelling agent is derived from

isocyanate-terminated prepolymer having the formula $OCNC_6H_3(CH_3)NHCO(OCH_2CH_2)_nOCONHC_6H_3(CH_3)$-NCO where n is sufficiently high to render the prepolymer hydrophilic and water-soluble.

5. The cover of any of claims 1 to 4 further characterized by the feature that said cover comprises:

(A) water as the major component by weight,

(B) 5.8 to 22.5 weight percent low density filler material,

(C) 2 to 10 weight percent gelling agent,

(D) 0.01 to 0.14 weight percent surfactant wherein said weight percents are based on the total weight of the cover.

6. The cover of any of claims 1 to 5 further characterized by the feature that:
said low density filler material comprises glass microbubbles and expanded plastic capsules;
said gelling agent is derived from isocyanate-terminated prepolymer having the formula $OCNC_6H_3(CH_3)$-$NHCO(OCH_2CH_2)_nOCONHC_6H_3(CH_3)NCO$ where n is sufficiently high to render the prepolymer hydrophilic and water-soluble.

7. A method of sealing essentially the entire area of an exposed, top surface of a body of liquid in a relatively static condition thereby suppressing the evolution or release of volatile gases, fumes or vapor from said exposed surface into the atmosphere and preventing contaminants, precipitation, or condensate from entering said body of liquid through said exposed, top surface, said method characterized in that it comprises the steps of:

(i) preparing a mixture comprising water, low density filler material, surfactant or wetting agent, and either isocyanate-terminated prepolymer or polyhydroxy polymer to form an initially fluid, composite mixture, and

(ii) applying a sufficient quantity of said mixture to said exposed, top surface to essentially entirely cover said surface with a layer of the desired thickness of said mixture, said layer resting on top of, and generally in contact with said surface, said layer then gelling until a buoyant, flexible cover is formed.

8. The method of claim 7 further characterized by the feature that said method further comprises the steps of:

(a) aging said fluid, composite mixture for a sufficient time prior to application of said mixture to said exposed, top surface to render said mixture essentially non-water dispersible, yet still fluid, and

(ii) then applying a sufficient quantity of said mixture to said exposed, top surface by discharging said mixture through one or more nozzles submerged in said body of liquid below said top, exposed surface such that said mixture floats to said top, exposed surface, and forms a continuous layer of said mixture of the desired thickness over essentially the entire area of said surface, said layer resting on and generally in contact with said exposed, top surface, said layer then gelling until a buoyant, flexible cover is formed.

9. The method of any of claims 7 to 8 further characterized by the feature that the desired thickness is between 2 to 15 mm.

10. A body of liquid in a relatively static condition having an exposed, top surface essentially the entire area of said exposed, top surface being sealed with the cover of any of claims 1 to 6.